# EUROPEAN PATENT SPECIFICATION

(11) **EP 3 027 052 B1**
(45) Date of publication and mention of the grant of the patent: **27.05.2020**
(21) Application number: 14741982.4
(22) Date of filing: 14.07.2014
(51) Int. Cl.: A47J 27/00, H05B 6/62, H05B 3/00, H05B 3/02, A23L 5/10

(54) **PROCESS FOR BATCHWISE COOKING OF A FOOD PRODUCT USING A PULSED ELECTRIC FIELD AND COOKING SYSTEM FOR SUCH PROCESS**
VERFAHREN ZUM CHARGENWEISEN KOCHEN EINES LEBENSMITTELPRODUKTS MITTELS GEPULSTEM ELEKTRISCHEM FELD UND KOCHSYSTEM FÜR SOLCH EIN VERFAHREN
PROCÉDÉ POUR UNE CUISSON PAR LOTS D'UN PRODUIT ALIMENTAIRE AU MOYEN D'UN CHAMP ÉLECTRIQUE PULSÉ ET SYSTÈME DE CUISSON POUR UN TEL PROCÉDÉ

(30) Priority: 12.07.2013 EP 13176298
(43) Date of publication of application: 08.06.2016
(73) Proprietor: IXL Nederland B.V., 3998 NH Schalkwijk (NL)
(72) Inventor: VAN OORD, Govert, NL-3998 NH Schalkwijk (NL)
(74) Representative: Nederlandsch Octrooibureau
(86) International application number: PCT/NL2014/050479
(87) International publication number: WO 2015/005793

(56) References cited:
- EP-A1- 1 994 836
- WO-A1-2011/139144
- WO-A1-2012/125021
- DE-A1-102010 028 780
- US-A- 4 695 472
- G P Piette ET AL: "Ohmic Cooking of Processed Meats and its Effects on Product Quality", Food Engineering and Physical Properties, 2003, pages 1-8, XP055092378, Retrieved from the Internet: URL:http://www.researchgate.net/publicatio n/227917464_Ohmic_Cooking_of_Processed_Mea ts_and_its_Effects_on_Product_Quality/file /60b7d51c35199c133a.pdf [retrieved on 2013-12-09]
- "Nutri-Pulse The e-Cooker", , 17 October 2013 (2013-10-17), XP055092693, Retrieved from the Internet: URL:http://www.innovation-xl.com/uploads/B rochure2013/Nutri-Pulse_e-Cooker_2013.pdf [retrieved on 2013-12-10]
- ALEKSANDRA ZDERIC ET AL: "Breakage of Cellular Tissue by Pulsed Electric Field: Extraction of Polyphenols from Fresh Tea Leaves", CHEMICAL ENGINEERING TRANSACTIONS , vol. 32 25 May 2013 (2013-05-25), pages 1795-1800, XP055092697, ISSN: 1974-9791 Retrieved from the Internet: URL:http://www.aidic.it/cet/13/32/300.pdf [retrieved on 2013-12-10]
- "Pulsed electric field food cooking", , 16 January 2013 (2013-01-16), XP055092682, Retrieved from the Internet: URL:http://www.foodtech-portal.eu/index.ph p?title=Special:PdfPrint&page=Pulsed electric field food cooking [retrieved on 2013-12-10]

## Description

### Field of the Invention

The invention relates to a process for batch-wise cooking of a food product by subjecting the food product to a pulsed electric field treatment and to a cooking system suitable for such process.

### Background of the Invention

The use of pulsed electric fields for the treatment of food products is known. It is in particularly known to destroy micro-organisms with high voltage bipolar pulses. In US 5,549,041 for example is disclosed a method for inactivating microorganisms in solid and semi-solid food products by treating the food products with high voltage electric pulses. In the process of US 5,549,041, the food product is placed in a treatment chamber with horizontal electrodes and the pulses have a very high frequency, i.e. a short pause time between two pulses, and are preferably changing polarity. In US 5,690,978 is disclosed a process wherein a continuous flow of liquid food product is subjected to a high voltage electric field treatment in order to inactivate vegetative and bacterial spore microorganisms.

It is further known to use PEF as a non-thermal treatment for altering the texture of food products. In W0O2006/121397 a process for the treatment of potatoes and other root vegetables with electric pulses is disclosed, wherein the strength of the electric field applied is such that pores are created in the membranes of the plant cellular material (electroporation). Thus, the mechanical stress during a subsequent cutting or slicing step is reduced. The process of WO2006/121397 is a continuous process using a relatively low electric field strength. The process is carried out at relatively low temperatures, i.e. at temperatures at which starch does not yet gelatinise.

The combination of a non-thermal pulsed electric field treatment for electroporation with a mild conventional heat treatment is also known. Reference is for example made to N.I. Lebovka et al., Journal of Food Engineering 65 (2004) 211-217*.*

Heating a food product by means of resistive (ohmic heating) using alternating current is known. In US 5,630, 360 is for example disclosed a continuous process for the pasteurisation of liquid egg by means of resistive heating, wherein the electrodes are connected to a high frequency source of alternating current. In JP200923066 a cooking appliance suitable for defrosting or heating a food product by means of resistive heating is disclosed.

Pulsed electric field treatments for cooking of food products, in the sense that raw products such as meat, fish or potatoes are heated to such extent that they are ready to eat, have been proposed. In such treatment, raw food products are subjected to a pulsed electric field at a relatively low field strength, preferably below 5 kV/cm. In WO2011/139144 is disclosed that meat, cod and raw potatoes and several raw vegetables can be cooked by subjecting them to a pulsed electric field with a strength of 1 or 2 kV/cm within minutes. The raw food product is placed in a liquid in a processing chamber that can be covered with a top cover. The processing chamber having a ground electrode at its bottom and a voltage electrode in the top cover.

In WO2012/125021 is disclosed a system for cooking of food products by means of a pulsed electric field. The system comprises a treatment pan with a removable top cover and a ground electrode in the bottom of the pan and a voltage electrode in the top cover. Thus, the treatment pan comprises a pair of horizontal electrodes between which a pulsed electric field can be applied.

In the known systems for PEF cooking, such as for example disclosed in WO2011/139144 and WO2012/125021, use is made of parallel, horizontally placed electrodes.

DE102010028780 discloses an apparatus and process for heating food, especially meat and sausage products, in a treatment chamber equipped with electrodes.

### Summary of the Invention

It has now been found that a process for batch-wise cooking food products by means of a pulsed electric field can be improved by placing the product to be treated in a treatment chamber having two opposite side walls that each form an electrode. The two electrodes each have an angle with the vertical plane of at most 45°, i.e. they are substantially vertically-extending, preferably they are vertically extending.

Accordingly, the present invention relates to a process for batch-wise cooking of a food product in a treatment chamber, wherein the treatment chamber has two opposite side walls each forming an electrode, wherein each electrode has an angle with the vertical plane of at most 45°, the process comprising the following steps:
(1) placing an amount of the food product, optionally in a surrounding liquid, in the treatment chamber between the two electrodes such that the food product and/or the surrounding liquid is in direct contact with the electrodes;
(2) applying electric pulses generated by a pulsed electric field generator to the electrodes such that the food product is subjected to a pulsed electric field having a field strength in the range of from 10 V/cm to 10 kV/cm, wherein the number of pulses is in the range of from 1 to 2,000,000 and the pulses each have a duration in the range of from 1 to 20,000 µseconds,
   wherein the food product and, if present, the surrounding liquid, has an electric conductivity in the range of from 0.01 to 10 S/m.

In a first preferred embodiment, step (2) is performed using an electric field strength in the range of from 10 V/cm to 10 kV/cm, preferably from 0.1 to 5 kV/cm and a number of pulses in this preferred embodiment is in the range of from 1 to 10,000. In a second preferred embodiment, step (2) is performed using an electric field strength in the range from 10 V/cm to 180 V/cm, more preferably from 10 V/cm to 100 V/cm, and the number of pulses preferably ranges from 5,000 to 2,000,000.

An important advantage of using a pair of substantially vertically-placed electrodes instead of horizontal electrodes such in WO2011/139144 and WO2012/12502, is that the level to which the treatment chamber is filled is not critical for subjecting the entire product to a homogeneous electric field. It is thus not necessary to completely fill the treatment chamber with liquid. Thus, the amount of product to be cooked and/or the amount of surrounding liquid does not need to be adapted to the size of the treatment chamber, but may be an amount that is fit-for-purpose.

Another advantage is that it is not necessary to remove all air or other gases entrapped in the product or in the liquid surrounding the product. In the prior art horizontal arrangement of electrodes, any escaping air bubbles will stick to the upper electrode that is facing the treatment chamber at its upper end and thus may disturb the electric field. In a vertical arrangement, air can escape without disturbing the electric field.

A further advantage is that substantially vertically-placed electrodes make the cooking process suitable for products that expand during the cooking process.

Since the cooking times in the process according to the invention are significantly lower than cooking times needed when using conventional cooking techniques, the process according to the invention is particularly suitable to cook different components of a meal separately and consecutively using the optimum cooking conditions for each component. Such a meal may for example comprise meat or fish as one component, vegetables as a further component, and a potato or cereal-based product as a still further component. Each meal component is then cooked in a separate treatment chamber provided with a pair of opposite, substantially vertically-extending electrodes. By consecutively connecting at least one electrode of each treatment chamber to a common pulsed electric field generator, the two or more food components can be consecutively cooked. Thus, a complete meal can be cooked in a very short preparation time whilst retaining the optimum sensory and nutrient quality of each meal component.

PEF cooking according to the invention, but particularly according to the second preferred embodiment, is that the amount of energy needed in order to cook the product (i.e. treating the product until it is considered as ready-to-eat in terms of digestibility and safety) is significantly reduced compared to conventional cooking techniques. Such reduction in energy consumption is attributable to the greatly reduced cooking times and low cooking temperature, but also to the low field strengths needed when PEF cooking is performed according to the second preferred embodiment. As such, the process and cooking system according to the invention may be ran on the energy of a (rechargeable) battery, such as the one used in vehicles (cars, boats, etc). In addition, the cooking system is compact in size and may easily be applied or built in a vehicle. The process and cooking system according to the invention is thus particularly suitable to be used as mobile cooking system for cars, trucks, campers, sailing boats, motor boats and the like. A particular advantage for application in sailing boats is that the system according to the invention may be designed as such that spillage of liquid from the food product and/or the surrounding liquid during cooking is reduced to a minimum or even completely prevented when sailing at an acute angle with the water surface for prolonged periods, which disables the use of conventional cooking techniques.

The invention further relates to a cooking system suitable for cooking a food product according to the process as hereinbefore described, the cooking device comprising a PEF generator and a coupling station containing or adapted to receive one or more treatment chambers as hereinbefore defined, wherein the coupling station is electrically connected to the PEF generator and comprises means for electrically connecting at least one of the electrodes of each of the one or more treatment chambers to the PEF generator.

In a preferred embodiment of the cooking system according to the invention, the coupling station comprises a removable top cover, for example a hinged cover lid, capable of covering the one or more treatment chambers contained in the coupling station. The top cover comprises contact elements that are electrically connected to the PEF generator and that are contacting at least one of the electrodes of each of the one or more treatment chambers when the top cover covers the one or more treatment chambers. An advantage of this embodiment is that the PEF treatment can be started by simply placing the top cover on the treatment chamber(s) and stopped by lifting the top cover from the one or more treatment chambers.

### Summary of the Drawings

In Figure 1 is shown a perspective view of part of a cooking system according to the invention, showing the outer housing of the coupling station and a removable housing adapted to receive a unit with three treatment chambers.
In Figure 2 is shown a perspective view of the same coupling station as in Figure 1, with the removable housing placed in the outer housing and showing a unit with three perforated treatment chambers.
In Figure 3 is shown a perspective view of how contact elements in the cover lid of the outer housing contact the electrodes of the treatment chamber.
In Figures 4a and 4b is shown two longitudinal sections of a coupling station comprising three treatment chambers, each filled with a solid food product in a surrounding liquid, in an almost closed position (Figure 4a) and a closed position (Figure 4b) of the top cover.

### Detailed Description of the Invention

The process according to the invention is a process for batch-wise cooking of a food product by means of a Pulsed Electric Field (PEF) treatment. An amount of the food product is placed in a treatment chamber. The treatment chamber has two opposite side walls that each form an electrode. Each of the two opposite electrode side walls has an angle with the vertical plane of at most 45°, preferably at most 30°, more preferably at most 10°, still more preferably at most 5°. In a particularly preferred embodiment the treatment chamber has two opposite vertically-extending electrodes. The two opposite electrode side walls may or may not be parallel to each other.

The treatment chamber may be of any form and size, as long as the two side walls forming the electrode are positioned as defined herein. Conveniently, differently formed and sized treatment chambers are designed as such that they fit in the same system as described further below. In a particularly preferred embodiment, the treatment chamber has a rectangular cuboid shape, defined by four vertically-extending side walls and a rectangular bottom. Two opposite side walls of the four vertically-extending side walls each form a vertically-extending electrode. Thus, the treatment chamber is provided with two parallel, spaced-apart, vertically-extending electrodes.

Any further surfaces, other than the two electrode walls, that are defining the treatment chamber, typically two other side walls and a bottom, are made of electrically insulating material, i.e. a material that does not conduct an electric current, under the influence of an electric field. The upper end of the treatment chamber is preferably covered, more preferably by a removable top cover, i.e. a top cover that can be lifted or removed when filling the treatment chamber with food product and/or surrounding liquid, and closed when the PEF cooking system is operating.

Alternatively, the treatment chamber may have a form distinct from cuboid. It may be appreciated that the form of the treatment chamber may be adapted for the purpose of the cooking or the type of food to be cooked. Exemplary is the use of a treatment chamber which is designed as a cup or a beaker, which may be used to prepare hot beverages (e.g. tea, soup), or the use of an egg-shaped treatment chamber for cooking an egg or egg white. It should be realized that any form is possible, as long as the treatment chamber has two substantially vertically-extending sides that form the electrodes. Hence, an egg-shaped treatment chamber is not perfectly ovoid, but typically has two flattened opposite sides forming the electrodes. The differently formed treatment chambers may impart (or enforce) their specific form on the final food product after step (2). This embodiment is thus particularly suitable for treating food products that change from substantially liquid (or flowable) to substantially solid during step (2), such as egg or egg white. As such, differently sized and/or formed treatment chambers may be used in combination within the same coupling station, without the need of changing the entire system.

Alternatively, an insert of electrically insulating material may be placed within the treatment chamber. The insert may be any form and size, as long as it fits within the treatment chamber. The insert may be shoved in the treatment chamber such that it clamps between the electrodes. Such an insert is typically a solid piece of material or hollow without any openings for the food product and/or surrounding liquid to enter the insert. When placed in the treatment chamber, no food product and optionally surrounding liquid will be present where the insert is located. Alternatively, the insert may take the form of a container that typically has two oppositely-positioned open ends which enable the food product and optionally the surrounding liquid, when placed in the container, to be in direct contact with the electrodes of the treatment chamber. The container should be designed as such that the distance between the two oppositely-positioned open ends is (about) the same as the distance between the electrodes within the treatment chamber. When the container is placed in the treatment chamber, the open ends clamp between the electrodes such that the interface between each of the open ends and the electrode is preferably liquid-tight, in order to hold a liquid food product and/or the surrounding liquid within the container until step (2) is performed. The container typically has a further opening, which enables the placement of the food product and optionally the surrounding liquid in the container when the container is placed in the treatment chamber. This further opening may be a separate opening or may take the form of a slit that stretches along the entire top side of the container and bridge the two oppositely-positioned open ends, thus forming effectively a single opening that runs from one end to the opposite end over the top side of the container.

The insert is typically placed in the treatment chamber prior to step (1). In case the insert takes the form of a container, it is placed as such that the electrodes of the treatment chamber border the container along the two open ends and the further opening is placed at the top side of the container. The food product, and optionally the surrounding liquid, can be placed on top or within the insert in step (1) and subsequently be subjected to the PEF cooking in step (2). As such, differently sized and/or shaped inserts may be used within the same treatment chamber(s), without the need of changing the entire system. The differently shaped inserts may impart (or enforce) their specific shape on the final food product after step (2). This embodiment is thus particularly suitable for treating food products that change from substantially liquid (or flowable) to substantially solid during step (2), such as egg or egg white. Hence, an exemplary embodiment is an insert in the form of an egg-shaped container having two open ends at the top and bottom of the ovoid and a further opening at the side of the ovoid (i.e. at the top when the ovoid is placed on its side). A further advantage of using inserts is that the treatment chamber is expediently reduced in size, without the need for changing the treatment chamber, which may be practical when cooking small amounts of food product.

The food product, optionally in surrounding liquid, to be subjected to the process according to the invention may be conveniently provided in a pre-packaged container that is to be placed in the treatment chamber. Preferably, said container has two opposite sides of electrically conduction material able to contact the electrodes of the treatment chamber. In step (1), the container is placed in the treatment chamber such that the electrically conducting sides each touch an electrode of the treatment chamber, thus enabling the electric field to penetrate the food product contained in the container during step (2). After completion of step (2), the container containing the cooked food product is easily taken out of the treatment chamber, after which the cooked ready-to-eat food product may be taken out of the container. The container may be provided with a code (e.g. bar code, smart code) that is readable for the system and that contains information regarding the settings of the system adapted for the particular food product contained within said container.

In an alternative embodiment for treating a substantially solid food product, step (1) is performed by placing the surrounding liquid in the treatment chamber and subsequently submerging the solid food product packaged in a permeable holder in the surrounding liquid. The food product is subjected to step (2) when still packaged within the permeable holder, and after completion of step (2), the cooked food product may easily be taken out of the treatment chamber by means of the holder, as such automatically separating the cooked food product from the surrounding liquid. The holder may be of any design and any food-grade material, as long as it is permeable for the surrounding liquid and not for the food product (both before and after step (2)). Such a holder may be referred to as a sachet, pouch, bag, pocket, and the like.

In the process according to the invention, an amount of the food product, optionally in a surrounding liquid, is placed in the treatment chamber between the two electrodes such that the food product and/or the surrounding liquid is in direct contact with the electrodes. The food product may be a liquid food product or a solid food product. In case the food product is a solid food product, the food product is preferably placed in a surrounding liquid between the electrodes.

The food product has an electric conductivity in the range of from 0.01 to 10 S/m, preferably of from 0.1 to 5 S/m, more preferably of from 0.3 to 3 S/m. In case the food product is a solid food product and is placed in a surrounding liquid between the electrodes, both the food product and the surrounding liquid have an electric conductivity in the range of from 0.01 to 10 S/m, preferably of from 0.1 to 5 S/m, more preferably of from 0.3 to 3 S/m.

The surrounding liquid, if used, is surrounding the food product, i.e. the food product is fully immersed in the liquid. The surrounding liquid may be any liquid suitable for cooking the food product in, for example water, milk, a sauce, broth or stock, a soup, a salt solution or any other suitable cooking liquid.

The food product may be any liquid or solid food product that needs to be heated in order to prepare a ready-to-eat product. Examples of suitable food products are raw meat, poultry, fish, in particular pieces of braising meat, uncooked vegetables, raw potatoes or potato products, raw eggs or egg products or composed food product comprising two or more of such food components.

Reference herein to cooking is to heating the food product to such extent that it considered as ready-to-eat in terms of digestibility and safety. In order to make food products sufficiently digestible and safe for consumption, starch may for example need to be sufficiently gelatinised, enzymes and other proteins to be sufficiently denatured, contaminant micro-organisms to be killed. It will be appreciated that the extent to which a product needs to be heated to be considered as sufficiently cooked, will strongly depend on the food product to be cooked and on prevailing regulatory requirements.

Preferably, the cooking process according to the invention comprises heating the food product to achieve a temperature increase of the product of at least 20 °C, preferably at least 30 °C, more preferably at least 40 °C. Reference herein to the temperature of a solid food product is to the core temperature. It should be noted that the temperature raise is accomplished by the application of the pulsed electric fields in step (b), referred to as ohmic heating, and no separate (thermal) heating of the food product is required. Thus, it is preferred that the cooking process according to the invention comprises ohmic heating the food product to achieve a temperature increase of the product of at least 20 °C, preferably at least 30 °C, more preferably at least 40 °C.

The process according to the invention is a batch-wise process. This means that a discrete amount of the food product is placed in the treatment chamber, cooked by subjecting the food product, optionally in a surrounding liquid, to a pulsed electric field and that the cooked product is then discharged from the treatment chamber. The surrounding liquid may also be discharged from the treatment chamber. Alternatively, all or part of the surrounding liquid is retained in the treatment chamber and used as surrounding liquid for another solid food product that will be cooked in the treatment chamber.

In the process according to the invention, electric pulses generated by a pulsed electric field generator are applied to the electrodes of the treatment chamber once the food product and optionally the surrounding liquid have been placed in the treatment chamber. Thus, the food product and, if present, the surrounding liquid are subjected to a pulsed electric field. The electric field thus applied between the electrodes has a strength in the range of from 10 V/cm to 10 kV/cm. In a first preferred embodiment, the electric field strength preferably ranges from 0.1 to 5 kV/cm. The number of pulses in this preferred embodiment is in the range of from 1 to 10,000 and the pulses each have a duration in the range of from 1 to 20,000 µseconds. In a second preferred embodiment, the electric field strength preferably ranges from 10 V/cm to 180 V/cm, more preferably from 12 V/cm to 150 V/cm, most preferably from 20 V/cm to 100 V/cm, and the number of pulses preferably ranges from 5,000 to 2,000,000 and the pulses each have a duration in the range of from 1 to 20,000 µseconds.

In the process according to the invention, one of the two electrodes of the treatment chamber, the voltage electrode, may be electrically connected to the pulsed electric field generator. The other electrode is then a grounded electrode and the electric field generator applies voltage pulses to the voltage electrode. Alternatively and preferably, both electrodes are connected to the pulsed electric field generator. The generator is then applying, in pulses, an electric potential difference over the two electrodes. The pulsed electric field generator applies thus electric voltage pulses to the electrode(s) such that the food product and the surrounding liquid placed between the two electrodes are subjected to a pulsed electric field. The electric field between the two electrodes has a strength in the range of from 10 V/cm to 10 kV/cm. In the first preferred embodiment, the electric field preferably ranges from 0.1 to 8 kV/cm, more preferably of from 0.2 to 5 kV/cm, even more preferably of from 0.5 to 4 kV/cm. In the second preferred embodiment, the electric field strength preferably ranges from 10 V/cm to 180 V/cm, more preferably from 10 V/cm to 150 V/cm, even more preferably from 25 V/cm to 100 V/cm.

The number of pulses to which the food product is subjected is in the range of from 1 to 2,000,000, preferably from 5 to 500,000. In the first preferred embodiment, the number of pulses ranges from 1 to 10,000, preferably of from 5 to 5,000, more preferably 10 to 1,000. In the second preferred embodiment, the number of pulses ranges from 5,000 to 2,000,000, preferably from 10,000 to 1,000,000, more preferably from 50,000 to 250,000, most preferably from 100,000 to 200,000. Each of the pulses have a duration in the range of from 1 to 20,000 µseconds, preferable of from 5 to 10,000 µseconds, more preferable of from 10 to 1,000 µseconds. Between two pulses there is a pause time. The duration of the pause time may be any suitable time, preferably in the range of from 0.01 to 5 seconds, more preferably of from 0.05 to 3 seconds, even more preferably of from 0.1 to 2 seconds. The total duration of the PEF treatment, i.e. the total duration of the pulses including the pauses between pulses is preferably less than 15 minutes, more preferably less than 12 minutes, even more preferably less than 5 minutes, most preferably less than 3 minutes. A total duration in the range of from 10 seconds to 2 minutes is particularly preferred. It will be appreciated that the duration of the pulses including the pauses between pulses needed for cooking the food product will strongly depend on the food product to be cooked. Gelatination of potato starch for example, needs a much longer treatment time than denaturation of proteins or killing of micro-organisms.

It will be appreciated that the optimum for the strength of the electric field, the number and duration of each of the pulses, and the total duration of the treatment will strongly depend on the type and size of the food product to be cooked. For a specific food product, the combination of parameters will have to be optimised in order to obtain a ready-to-eat product with the desired degree of cooking. It is within the skills of the skilled person to optimise the PEF treatment. For a piece of meat to be braised for example, it is preferred to cook until the meat has obtained a temperature in the range of from 45 to 85 °C. For raw potatoes or a product comprising raw potatoes, the cooking treatment should be such that starch gelatinisation has taken place to the extent that the product is ready-to-eat.

The process according to the invention is particularly suitable for cooking pieces of meat that are conventionally cooked by means of braising or simmering. Preferably, the process is a process for braising a piece of meat, wherein the food product is a piece of meat and wherein the piece of meat is placed in a surrounding liquid in the treatment chamber and electric pulses are applied to the electrodes until the meat has a temperature in the range of from 45 to 85 °C. This is preferably achieved by subjecting the meat to a pulsed electric field with a strength in the range of from 0.5 to 4 kV/cm and applying a number of pulses is in the range of from 50 to 2,000, wherein the pulses each have a duration in the range of from 1 to 10,000 µseconds and wherein the meat is subjected to the pulsed electric field for less than 10 minutes, more preferably less than 5 minutes.

The second preferred embodiment, i.e. employing an electric field that ranges from 10 V/cm to 180 V/cm and number of pulses ranges from 5,000 to 2,000,000, is particularly suitable for cooking meat or fish. It has been surprisingly found that PEF cooking at such low electric field strengths provides satisfactory cooking to food products, in particular to meat and fish. PEF cooking at such low electric field strengths is unprecedented in the art, and has some major advantages compared to PEF cooking at higher electric filed strengths, in particular regarding the safety associated with using the system according to the invention.

The process may comprise an additional step between steps (1), i.e. placing the food product and optionally surrounding liquid in the treatment chamber, and step (2), i.e. cooking the product by means of a pulsed electric field treatment. In the additional step, the food product placed in the treatment chamber is subjected to a pretreatment wherein it is subjected to a pulsed electric field under such conditions that electroporation but no substantial heating takes place. Reference herein to no substantial heating is to less than 15 °C temperature increase of the food product, preferably less than 10 °C temperature increase, more preferably less than 5 °C temperature increase.

The configuration of the treatment chamber and the electrodes should be such that all of the food product and, if present, the surrounding liquid is subjected to the pulsed electric field. Thus, all of the food product and surrounding liquid is placed between the two electrodes and the liquid level in the treatment chamber when the food product, optionally in the surrounding liquid, is placed in the chamber, should be below the upper end of the electrodes.

The treatment chamber may have any suitable size and form. It will be appreciated that the size of the treatment chamber is preferably adapted to the size of the food product to be cooked. Preferably, the two electrodes of a treatment chamber are placed at a distance from each other in the range of from 0.5 to 50 centimeters, more preferably of from 1 to 20 centimeters, even more preferably 1 - 10 cm, even more preferably 2 - 10 cm, most preferably 3 - 7 cm. In case of a larger distance, the strength of the voltage pulses to be applied to the electrodes in order to achieve the desired field strength would become undesirably high. In order to have a sufficiently large treatment chamber for cooking typical sizes of food products, the distance between the side walls defining the treatment chamber that are not forming electrodes, is typically larger than the distance between the two electrode side walls. Preferably, the distance between opposite side walls without electrodes is at least two times, more preferably at least three times, the distance between the two electrodes.

In case the treatment chamber has not parallel electrodes, i.e. the two opposite electrodes of the treatment chamber each make a different angle with the vertical, it is preferred that the distance between the electrodes at the lower end of the chamber is smaller than the distance between the electrodes at the upper end of the treatment chamber. Thus, the electric field applied over the electrodes is stronger at the lower end than at the upper end, thus compensating for heat losses through convection at the lower end of the treatment chamber.

Preferably, the treatment chamber comprises a top cover, more preferably a removable top cover, for example a hinged cover lid, such that food product and surrounding liquid can be placed in the treatment chamber via the upper end of the chamber.

Reference herein to a removable top cover is to a cover capable of covering the upper end of the treatment chamber that may be removed from the upper end, typically by lifting the cover. Preferably, the removable top cover is adapted to close the electrical circuit or provided with means to close the electrical circuit only when the top cover is closed. Preferably, such means are present for each treatment chamber present in the system. It will be understood that the electrical circuit is only closed in case a food product and optionally an appropriate surrounding liquid is present in the treatment chamber. Conveniently, this is accomplished by including contact elements in the top cover that are part of the electrical circuit or by including a non-conductive element that upon closure of the top cover presses two contact elements together that are part of the electrical circuit. As such, the electric circuit is closed and the system operable only when the top cover is covering the treatment chamber, while no electric field can be generated when the top cover is not covering the treatment chamber, which greatly increases the safety of the system. The contact element typically is an elongated contact element that contacts the electrode over its length (when the top cover is covering the treatment chamber), such that a sufficient contact area between electrode and contact element is provided for applying the desired electric current pulses to the electrodes and to prevent undesired phenomena such as for example arching. It is especially preferred that the user of the system has to exert an amount of force to close the top cover, wherein the amount of force exceeds the force exerted on the top cover by gravity (i.e. the user has to press the top cover shut). It is also preferred that a safety system is in place, which ensures that the top cover is not easily (e.g. by accident) opened when the system is in use. Such a safety system suitably contains a switch or handle that needs to be switched or a button that needs to be pressed to open the top cover. Preferably, this means for opening the top cover is disabled when the system is in use.

In a preferred embodiment of the process according to the invention, the treatment chamber has a removable top cover and the top cover comprises a contact element that is contacting one of the electrodes of the treatment chamber when the top cover is covering the treatment chamber. The contact element is electrically connected to the PEF generator such that the contact element is electrically connecting the one electrode to the PEF generator when contacting the electrode, i.e. when the top cover is covering or closing the treatment chamber. The removable top cover may comprise a set of two of such contact elements, each contact element of the set contacting the other of the two electrodes of the treatment chamber when the top cover covers the treatment chamber and thus electrically connecting each of the electrodes to the PEF generator.

In an further preferred embodiment, the removable top cover is not part of the electric circuit between the two electrodes, but is designed as such that when the top cover is covering or closing the treatment chamber an electric connection between the PEF generator and one or both of the electrodes is closed. Such closing of the electric connection is suitably accomplished by an non-conductive element placed on the inside of the removable top cover (i.e. the side which forms the top side of the treatment chamber when the top cover is covering or closing the treatment chamber), which pushes a resilient contact element against a second contact element, which may be resilient or rigid, or pushes two resilient contact elements together, thereby bringing both contact elements in contact with each other. One of the contact elements is electrically connected to the PEF generator and the second contact element is electrically connected to an electrode, preferably the second contact element is part of one of the electrodes, or in other words one of the electrode is equipped with the second contact element. For proper functioning, it is irrelevant which of the contact elements is connected to the PEF generator and which is connected to an electrode. Likewise, it is irrelevant for proper functioning which of the electrodes is connected to or equipped with a contact element. In case of two or more treatment chambers, a non-conductive element as described hereinabove is preferably present for at least one, preferably two, of the electrodes of each treatment chamber. The force needed for the non-conductive element to bend the one or two resilient contact elements is suitably provided by the user of the system by closing the removable top cover. A further advantage associated with the design of the system according to this embodiment is that the top cover does not need to be connected connected to the PEF generator, such as via cable (4), which is preferable in view of the removable nature of the top cover.

In a preferred embodiment of the invention, two or more food products are separately cooked in separate treatment chambers. Each of the two or more food products is cooked according to the process according to the invention. Thus, two or more treatment chambers are needed. Each of the separate treatment chambers is a treatment chamber as hereinbefore defined, i.e. each treatment chamber is provided with two opposite, substantially vertically-extending electrodes.

Each of the two or more food products is placed in a separate treatment chamber. Preferably, the two or more treatment chambers are contained adjacent to each other in a common housing. The food products in the separate chambers may be cooked parallel, i.e. simultaneously, by subjected the food products at the same time to a pulsed electric field by simultaneously applying electric pulses to the electrodes of each chamber. It will be appreciated that parallel cooking can only be achieved by connecting at least one of electrodes of each treatment chamber to a separate PEF generator, such that electric pulses can be applied to the electrodes of each treatment chamber simultaneously. Preferably, a common PEF generator is used and at least one electrode of each pair of electrodes, i.e. of one treatment chamber, is connected to the common PEF generator. When using a common PEF generator, the two or more food products are cooked consecutively, i.e. by applying electric pulses to the electrodes of one chamber until the product in the chamber is sufficiently cooked and then applying electric pulses to the electrodes of another chamber until the product in that chamber is sufficiently cooked, etc. Since the treatment time for each food product is relatively short, i.e. typically within minutes, different components of a meal can suitably be cooked serially in order to prepare a complete meal. Preferably, each of the two or more food products is a component of a meal and the two or more food products together form a meal.

In case of two or more adjacent treatment chambers, the two or more treatment chambers are preferably covered by a common removable top cover. More preferably, the removable top cover comprises two or more contact elements as hereinbefore described, wherein each contact element is contacting one of the electrodes of one treatment chamber when covering the treatment chamber. More preferably, the removable top cover comprises two or more sets of two contact elements as hereinbefore described, each contact element of one set contacting the other of the two electrodes of one treatment chamber when the top cover covers the treatment chamber and thus electrically connecting each of the electrodes to the PEF generator. In case of two or more treatment chambers and a removable top cover with two or more (sets of) contact elements, the top cover preferably comprises switching means for switching on and off the electrical connection between contact element and PEF generator.

The invention further relates to a cooking system suitable for cooking a food product according to the process of the invention. The cooking system comprises:
(a) a PEF generator;
(b) a coupling station containing or adapted to receive one or more treatment chambers and, in case the coupling station is a coupling station adapted to receive the treatment chambers
(c) a unit comprising the one or more treatment chambers adapted to be placed in and removed from the coupling station, wherein the coupling station is electrically connected to the PEF generator and comprises means for electrically connecting at least one of the electrodes of each of the treatment chambers to the PEF generator when the treatment chambers are contained in the coupling station;and wherein each treatment chamber has two opposite side walls each forming an electrode, wherein each electrode has an angle with the vertical plane of at most 45°, preferably of at most 5°.

The coupling station is a docking station capable to make an electric connection between the PEF generator and the electrode(s) of the one or more treatment chambers. In case the coupling station contains or is adapted to receive two or more treatment chambers, the coupling station comprises means for electrically connecting the electrode(s) of each of the two or more treatment chambers to the PEF generator.

Preferably, the coupling station comprises a removable top cover capable of covering the one or more treatment chambers, when contained in the coupling station. More preferably, the removable top cover is adapted to close the electrical circuit or provided with means to close the electrical circuit only when the top cover is closed. Preferably, such means are present for each treatment chamber present in the system. It will be understood that the electrical circuit is only closed in case a food product and optionally an appropriate surrounding liquid is present in the treatment chamber. Conveniently, this is accomplished by including contact elements in the top cover that are part of the electrical circuit or by including a non-conductive element that upon closure of the top cover presses two contact elements together that are part of the electrical circuit. As such, the electric circuit is closed and the system operable only when the top cover is covering the treatment chamber, while no electric field can be generated when the top cover is not covering the treatment chamber, which greatly increases the safety of the system. The contact element typically is an elongated contact element that contacts the electrode over its length (when the top cover is covering the treatment chamber), such that a sufficient contact area between electrode and contact element is provided for applying the desired electric current pulses to the electrodes and to prevent undesired phenomena such as for example arching. It is especially preferred that the user of the system has to exert an amount of force to close the top cover, wherein the amount of force exceeds the force exerted on the top cover by gravity (i.e. the user has to press the top cover shut). It is also preferred that a safety system is in place, which ensures that the top cover is not easily (e.g. by accident) opened when the system is in use. Such a safety system suitably contains a switch or handle that needs to be switched or a button that needs to be pressed to open the top cover. Preferably, this means for opening the top cover is disabled when the system is in use.

Thus, in a first especially preferred embodiment, the removable top cover comprises one or more contact elements as hereinbefore described, wherein each of the one or more the contacts elements is electrically connected to the PEF generator and adapted to contact one of the electrodes of the one or more treatment chamber when the top cover covers the one or more treatment chambers, such that the electrode(s) are then electrically connected to the PEF generator. Preferably, the top cover comprises one or more sets of two contact elements as hereinbefore described. Each contact element of a set is adapted to contact the other electrode of one treatment chamber. In case of two or more treatment chambers, the top comprises one contact element or, preferable, one set of two contact elements for each treatment chamber.

In an second especially preferred embodiment, the removable top cover comprises a non-conductive element and at least one of the walls of the treatment chamber forming an electrode is electrically connected to or equipped with a first contact element and the coupling station comprises a second contact element in electric connection with the PEF generator. The non-conductive element is suitably placed on the inside of the removable top cover, i.e. the side which forms the top side of the treatment chamber when the top cover is covering or closing the treatment chamber, and the top cover is not part of the electric circuit connecting the electrodes with the PEF generator. At least one of the contact elements is of resilient nature and the other contact element may be resilient or rigid, and the non-conductive element is preferably designed as such that it pushes the resilient contact element against the second contact element or that it pushes two resilient contact elements together upon closing of the top cover (i.e. covering the treatment chamber), thereby contacting both contact elements and as such bringing the electrode connected to or equipped with a contact element in electric connection with the PEF generator. Preferably, both electrodes of the treatment chamber are electrically connected to or equipped with a contact element which is brought in contact by the non-conductive element upon closing of the top cover. For proper functioning of the system, it is irrelevant which of the contact elements is connected to the PEF generator and which is connected to an electrode. Likewise, it is irrelevant for proper functioning which of the electrodes is connected to or equipped with a contact element. In case of two or more treatment chambers, a non-conductive element as described hereinabove is preferably present for at least one, preferably two, of the electrodes of each treatment chamber. The force needed for the non-conductive element to bend the one or two resilient contact elements is suitably provided by the user of the system by closing the removable top cover. A further advantage associated with the design of the system according to this embodiment is that the top cover does not need to be connected with an energy supply, which is preferable in view of the removable nature of the top cover.

In a preferred embodiment, the coupling station is adapted to receive the one or more treatment chambers and the system further comprises a unit comprising the one or more treatment chambers which unit is adapted to be placed in and removed from the coupling station. The advantage of a system with such removable unit with one or more treatment chambers, is that the food product(s), optionally together with surrounding liquid, can be placed in the treatment chamber(s) of the unit prior to placing such unit in the coupling station. In addition, the size and/or shape of the treatment chamber may be adapted to the size and/or type of food product. The treatment chamber may for example be smaller than the space in the coupling station that is available for receiving the treatment chamber, which may be convenient for smaller food products. Likewise, the treatment chamber may be cuboidly shaped or may be of any other shape, as long as the treatment chamber comprises two opposite side walls that each form an electrode. The other walls of electrically insulating material may give any form to the treatment chamber (e.g. egg-shaped or beaker-shaped), as long as it fits in the space in the coupling station that is available for receiving the treatment chamber. As such, differently sized and/or formed treatment chambers may be used in combination within the same coupling station, without the need of changing the entire system.

More preferably, at least a wall defining the one or more treatment chambers in such removable unit is perforated. Reference herein to a perforated wall is to a wall comprising one or more openings through which liquid can enter the treatment chamber, whilst solid food product is retained in the chamber. An advantage of a cooking system comprising a removable unit with perforated treatment chambers (baskets) is that a solid food product to be cooked may be placed in the treatment chamber without surrounding liquid and that the surrounding liquid may be placed either directly in a chamber of the coupling station adapted to receive one of the treatment chambers of the unit or, preferably, in a separate housing adapted to receive the unit, which housing is adapted to be placed in and removed from the coupling station.

In a preferred embodiment, the system comprises a removable unit comprising one or more perforated treatment chambers and a housing for receiving such unit, which housing is adapted to be placed in and removed from the coupling station. In case the process according to the invention is carried out in such cooking system with a removable unit comprising one or more perforated treatment chambers and a separate housing for receiving such unit, step (1) of the process according to the invention preferably comprises placing the surrounding liquid in the housing adapted to receiving the unit and placing the solid food product in the one or more treatment chambers of the unit. The unit is then placed in the housing such that the solid food product is immersed in the surrounding liquid. In case the food product is not fully immersed in surrounding liquid, additional surrounding liquid is added such that the liquid level is above the upper end of the food product. In order to subject the food product to the pulsed electric field, housing and unit are placed in the coupling station and the electrodes are electrically connected to the PEF generator. It will be appreciated that the unit may be placed in the housing prior to or after the housing has been placed in the coupling station.

The unit and/or the housing may be provided with handles or other means for holding the unit and/or housing to facilitate placing them in or removing them from the coupling station. Such means are well-known in the art.

### Detailed Description of the Drawings

The invention will be further illustrated by means of the following, non-limiting drawings. Corresponding reference numbers in different figures have the same meaning as in the other figures.

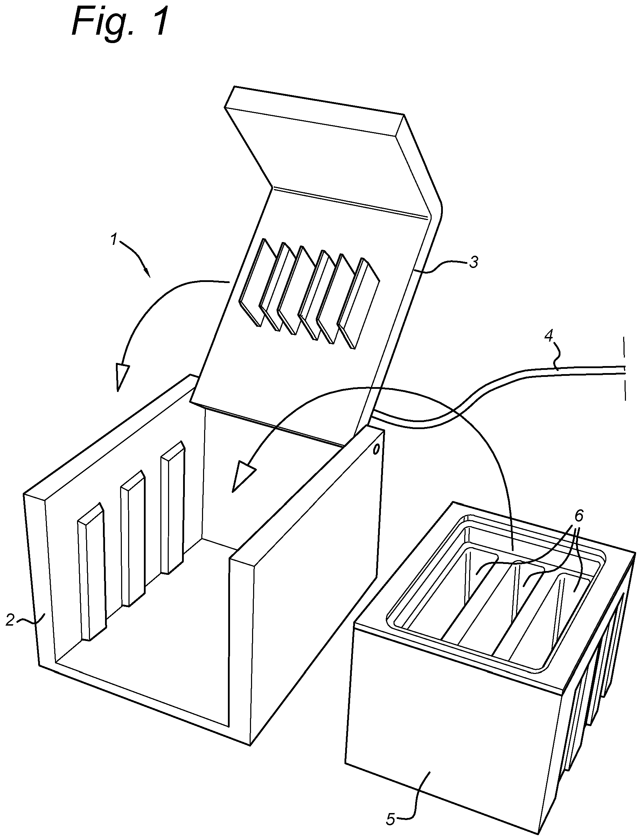

In Figure 1 is schematically shown part of a cooking system according to the invention comprising coupling station 1 comprising part 2 adapted to receive one or more treatment chambers and hinged cover lid 3 that is hinged to part 2. Coupling station 1 is electrically connected to a PEF generator (not shown) via cable 4. The system further comprises housing 5 adapted to be placed in and removed from coupling station 1. Housing 5 comprises three compartments 6 adapted to receive a unit comprising three treatment chambers.

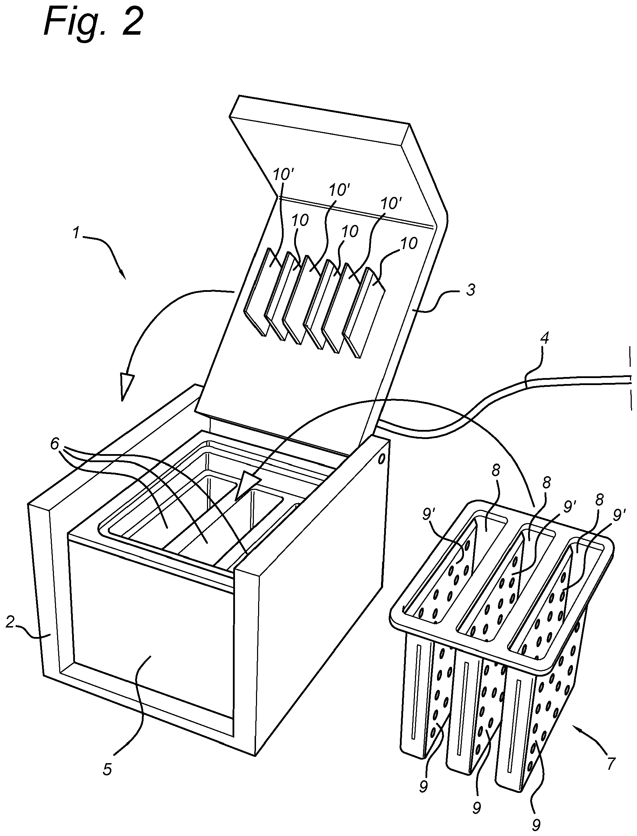

In Figure 2 is shown the same coupling station 1 as in Figure 1, but now with housing 5 placed in part 2 of coupling station 1. The system further comprises unit 7 which comprises three perforated treatment chambers 8. Unit 7 is adapted to be placed in housing 5. Each treatment chamber 8 has two opposite side walls that each form a pair of two parallel vertically-extending electrodes 9 and 9'. Bottom and the two other side walls 11 of each treatment chamber 8 is made of electrically insulating material. Hinged cover lid 3 is provided with three sets of contact elements 10 and 10'. When unit 7 with treatment chambers 8 is placed in housing 5, and unit 7 and housing 5 are placed in part 2 of coupling station 1, i.e. the treatment chambers 8 are contained in coupling station 1, and cover lid 3 is closing part 2 of coupling station 1, contact elements 10 and 10' are contacting electrodes 9 and 9', respectively, such that electrodes 9 and 9' are each connected, via coupling station 1, to the PEF generator. Preferably, coupling station 1 is connected to a single PEF generator and the electrodes 9 and 9' of one treatment chamber 8 are connected to the PEF generator. The system is then provided with switching means able to connect the different treatment chambers consecutively, i.e. one after the other, to the PEF generator.

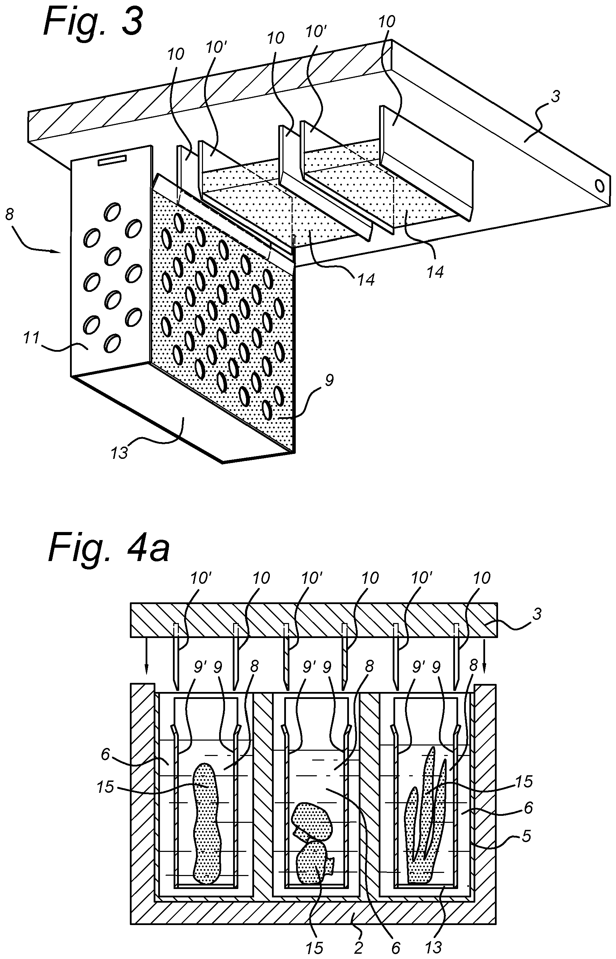

In Figure 3 is shown in more detail how contact element 10 contacts electrode 9 of a treatment chamber 8. In Figure 3 is shown one treatment chamber of a unit that comprises three treatment chambers. The treatment chamber 8 shown in Figure 3 has four perforated side walls, i.e. both the side walls 9 and 9' that form an electrode and the side walls 11 of insulating material are perforated. In the embodiment shown in Figure 3, bottom 13 of treatment chamber 8 is closed. In closed position of cover lid 3, contact elements 10 and 10'are contacting electrode 9 and 9', respectively. Between each pair of contact elements 10 and 10', is placed a block of insulating material 14 that serves to position contact elements 10 and 10' in the proper position to make good contact with electrodes 9 and 9'.

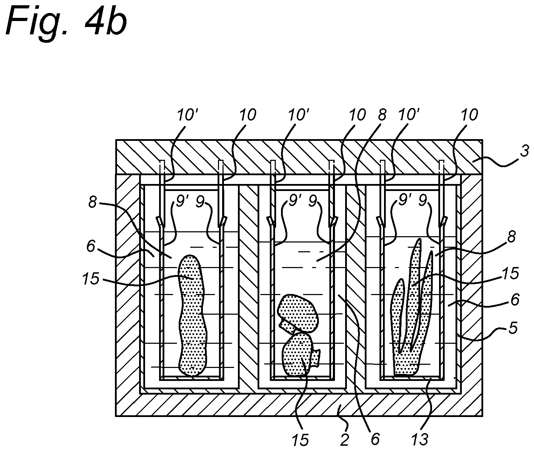

In Figure 4a is shown a longitudinal section of part 2 and top cover 3 of the coupling station in almost closed position, wherein housing 5 and a unit with three perforated treatment chambers 8 are placed in part 2. In each treatment chamber 8 is contained a food product 15 and each compartment 6 of housing 5 contains liquid that is surrounding food product 15 contained in perforated treatment chamber 8. In Figure 4b, a longitudinal section of part 2 and cover lid 3 of the coupling station in closed position is shown. Contact elements 10 and 10' now make contact with electrodes 9 and 9', respectively.

## Claims

1. A process for batch-wise cooking of a food product in a treatment chamber, wherein the treatment chamber has two opposite side walls each forming an electrode, wherein each electrode has an angle with the vertical plane of at most 45°, the process comprising the following steps:
(1) placing an amount of the food product, optionally in a surrounding liquid, in the treatment chamber between the two electrodes such that the food product and/or the surrounding liquid is in direct contact with the electrodes;
(2) applying electric pulses generated by a pulsed electric field generator to the electrodes such that the food product is subjected to a pulsed electric field having a field strength in the range of from 10 V/cm to 10 kV/cm, wherein the number of pulses is in the range of from 1 to 2,000,000 and the pulses each have a duration in the range of from 1 to 20,000 µseconds,
wherein the food product and, if present, the surrounding liquid, has an electric conductivity in the range of from 0.01 to 10 S/m.

2. A process according to claim 1, wherein the two opposite side walls forming the electrodes are placed at a distance from each other in the range of from 0.5 to 50 centimeters.

3. A process according to claim 1 or 2, wherein each electrode has an angle with the vertical plane of at most 5°.

4. A process according to claim 3, wherein the treatment chamber has a rectangular cuboid shape, defined by four vertically-extending side walls and a rectangular bottom, wherein two opposite side walls of the four vertically-extending side walls each form a vertically-extending electrode.

5. A process according to any one of the preceding claims, wherein the process is a process for parallel or consecutively cooking of two or more food products, wherein each of the food products is placed in a separate treatment chamber as defined in any one of the preceding claims, and cooked according to the process of any one of the preceding claims.

6. A process according to claim 5, wherein each of the two or more food products is a component of a meal and the two or more food products together form a meal.

7. A process according to claim 5 or 6, where the two electrodes of each treatment chamber are connected to a common pulsed electric field generator and wherein each of the two or more food components are consecutively cooked.

8. A process according to any one of the preceding claims, wherein there is a pause between the pulses with a duration in the range of from 0.01 to 5.0 seconds.

9. A process according to any one of the preceding claims, wherein the food product is subjected to a pulsed electric field for less than 5 minutes.

10. A cooking system suitable for cooking a food product according to the process of any one of the preceding claims, the cooking system comprising:
(a) a PEF generator;
(b) a coupling station containing or adapted to receive more than one treatment chambers; and, in case the coupling station is a coupling station adapted to receive the treatment chambers,
(c) a unit comprising the treatment chambers adapted to be placed in and removed from the coupling station,
wherein the coupling station is electrically connected to the PEF generator and comprises means for electrically connecting at least one of the electrodes of each of the treatment chambers to the PEF generator when the treatment chambers are contained in the coupling station;
and wherein each treatment chamber has two opposite side walls each forming an electrode, wherein each electrode has an angle with the vertical plane of at most 45°, preferably of at most 5°.

11. A cooking system according to claim 10, wherein the two opposite side walls of each treatment chamber forming the electrodes are placed at a distance from each other in the range of from 0.5 to 50 centimeters; and/or
wherein each treatment chamber has a rectangular cuboid shape, defined by four vertically-extending side walls and a rectangular bottom, wherein two opposite side walls of the four vertically-extending side walls each form a vertically-extending electrode.

12. A cooking system according to claim 10 or 11, wherein the coupling station comprises a removable top cover capable of covering the treatment chambers when contained in the coupling station, preferably wherein the top cover comprises one or more contact elements, wherein each of the one or more contact elements is electrically connected to the PEF generator and is adapted to contact one of the electrodes of the treatment chambers when the top cover covers the treatment chambers.

13. A cooking system according to any one of claims 10 to 12, wherein the system comprises the unit comprising the treatment chambers and wherein each of the treatment chambers has at least a bottom or a side wall that is perforated.

14. A cooking system according to claim 13, wherein the system further comprises:
(d) a housing adapted to receive the unit, which housing is adapted to be placed in and removed from the coupling station.

15. A process according to any one of claims 1 to 9 using the cooking system according to any one of claims 10 to 14.

## Patentansprüche

1. Verfahren zum chargenweisen Kochen eines Lebensmittelprodukts in einer Behandlungskammer, wobei die Behandlungskammer zwei gegenüberliegende Seitenwände aufweist, die jeweils eine Elektrode bilden, jede Elektrode einen Winkel von höchstens 45° zu der vertikalen Ebene hat und das Verfahren die folgenden Schritte umfasst:
(1) Einbringen einer Menge des Lebensmittelprodukts, wahlweise in einer umgebenden Flüssigkeit, in die Behandlungskammer zwischen den zwei Elektroden, so dass das Lebensmittelprodukt und/oder die umgebende Flüssigkeit in direktem Kontakt mit den Elektroden ist;
(2) Anlegen von einer Einrichtung zum Erzeugen eines gepulsten elektrischen Feldes erzeugter elektrischer Impulse, an die Elektroden, so dass das Lebensmittelprodukt einem gepulsten elektrischen Feld mit einer Feldstärke im Bereich von 10 V/cm bis 10 kV/cm ausgesetzt wird, wobei die Anzahl der Impulse im Bereich von 1 bis 2.000.000 liegt und die Impulse jeweils eine Dauer im Bereich von 1 bis 20.000 µs haben,
wobei das Lebensmittelprodukt und, falls vorhanden, die umgebende Flüssigkeit eine elektrische Leitfähigkeit im Bereich von 0,01 bis 10 S/m haben.

2. Verfahren nach Anspruch 1, wobei die zwei gegenüberliegenden Seitenwände, die die Elektroden bilden, in einem Abstand zueinander im Bereich von 0,5 bis 50 cm positioniert sind.

3. Verfahren nach Anspruch 1 oder 2, wobei jede Elektrode einen Winkel zu der vertikalen Ebene von höchstens 5° hat.

4. Verfahren nach Anspruch 3, wobei die Behandlungskammer eine Quaderform hat, die durch vier sich vertikal erstreckende Seitenwände sowie einen rechteckigen Boden gebildet wird, und zwei gegenüberliegende Seitenwände der vier sich vertikal erstreckenden Seitenwände jeweils eine sich vertikal erstreckende Elektrode bilden.

5. Verfahren nach einem der vorangehenden Ansprüche, wobei das Verfahren ein Verfahren zum parallelen oder aufeinanderfolgenden Kochen von zwei oder mehr Lebensmittelprodukten ist, und jedes der Lebensmittelprodukte in eine separate Behandlungskammer nach einem der vorangehenden Ansprüche eingebracht und gemäß dem Verfahren nach einem der vorangehenden Ansprüche gekocht wird.

6. Verfahren nach Anspruch 5, wobei jedes der zwei oder mehr Lebensmittelprodukte ein Bestandteil einer Mahlzeit ist und die zwei oder mehr Lebensmittelprodukte zusammen eine Mahlzeit bilden.

7. Verfahren nach Anspruch 5 oder 6, wobei die zwei Elektroden jeder Behandlungskammer mit einer gemeinsamen Einrichtung zum Erzeugen eines gepulsten elektrischen Feldes verbunden sind und jede der zwei oder mehr Lebensmittelkomponenten nacheinander gekocht wird.

8. Verfahren nach einem der vorangehenden Ansprüche, wobei eine Pause zwischen den Impulsen mit einer Dauer im Bereich von 0,01 ein bis 5,0 s liegt.

9. Verfahren nach einem der vorangehenden Ansprüche, wobei das Lebensmittelprodukt einem gepulsten elektrischen Feld für weniger als 5 Minuten ausgesetzt wird.

10. Kochsystem, das zum Kochen eines Lebensmittelprodukts gemäß dem Verfahren nach einem der vorangehenden Ansprüche geeignet ist, wobei das Kochsystem umfasst:
(a) eine Einrichtung zum Erzeugen gepulster elektrischer Felder (PEF generator);
(b) eine Kopplungs-Station, die mehr als eine Behandlungskammer enthält oder zum Aufnehmen derselben eingerichtet ist; und, wenn die Kopplungs-Station eine zum Aufnehmen der Behandlungskammern eingerichtete Kopplungs-Station ist,
(c) eine Einheit, die die Behandlungskammern umfasst, und zum Einsetzen in die Kopplungs-Station sowie zum Entfernen aus ihr eingerichtet ist,
wobei die Kopplungs-Station elektrisch mit der Einrichtung zum Erzeugen gepulster elektrischer Felder verbunden ist und Einrichtungen zum elektrischen Verbinden wenigstens einer der Elektroden jeder der Behandlungskammern mit der Einrichtung zum Erzeugen gepulster elektrischer Felder umfasst, wenn die Behandlungskammern in der Kopplungs-Station enthalten sind;
und wobei jede Behandlungskammer zwei gegenüberliegende Seitenwände aufweist, die jeweils eine Elektrode bilden, wobei jede Elektrode einen Winkel zur der vertikalen Ebene von höchstens 45°, vorzugsweise höchstens 5°, hat.

11. Kochsystem nach Anspruch 10, wobei die zwei gegenüberliegenden Seitenwände jeder Behandlungskammer, die die Elektroden bilden, in einem Abstand zueinander im Bereich von 0,5 bis 50 cm positioniert sind; und/oder
wobei jede Behandlungskammer eine Quaderform hat, die durch vier sich vertikal erstreckende Seitenwände und einen rechteckigen Boden gebildet wird, wobei zwei gegenüberliegende Seitenwände der vier sich vertikal erstreckenden Seitenwände jeweils eine sich vertikal erstreckende Elektrode bilden.

12. Kochsystem nach Anspruch 10 oder 11, wobei die Kopplungs-Station eine abnehmbare obere Abdeckung umfasst, die in der Lage ist, die Behandlungskammern abzudecken, wenn sie in der Kopplungs-Station enthalten sind, die obere Abdeckung vorzugsweise ein oder mehrere Kontaktelement/e umfasst, und jedes von dem einen oder den mehreren Kontaktelement/en elektrisch mit der Einrichtung zum Erzeugen gepulster elektrischer Felder verbunden und so eingerichtet ist, dass es mit einer der Elektroden der Behandlungskammern in Kontakt kommt, wenn die obere Abdeckung die Behandlungskammern abdeckt.

13. Kochsystem nach einem der Ansprüche 10 bis 12, wobei das System die Einheit umfasst, die die Behandlungskammern umfasst, und jede der Behandlungskammern wenigstens einen Boden oder eine Seitenwand aufweist, die perforiert ist.

14. Kochsystem nach Anspruch 13, wobei das System des Weiteren umfasst:
d) ein Gehäuse, das zum Aufnehmen der Einheit eingerichtet ist, wobei das Gehäuse zum Einsetzen in die Kopplungs-Station sowie zum Entfernen aus ihr eingerichtet ist.

15. Verfahren nach einem der Ansprüche 1 bis 9, bei dem das Kochsystem nach einem der Ansprüche 10 bis 14 eingesetzt wird.

## Revendications

1. Un procédé de cuisson par lots d'un produit alimentaire dans une chambre de traitement, dans lequel la chambre de traitement comporte deux parois latérales opposées formant chacune une électrode, dans laquelle chaque électrode forme un angle avec le plan vertical d'au plus 45°, le procédé comprenant les étapes suivantes:
(1) placer une quantité du produit alimentaire, éventuellement dans un liquide qui l'environne, dans la chambre de traitement entre les deux électrodes de telle sorte que le produit alimentaire et/ou le liquide environnant soit en contact direct avec les électrodes;
(2) appliquer aux électrodes des impulsions électriques générées par un générateur de champ électrique pulsé de telle sorte que le produit alimentaire soit soumis à un champ électrique pulsé ayant une intensité de champ de l'ordre de 10 V/cm à 10 kV/cm, le nombre d'impulsions étant de l'ordre de 1 à 2 000 000 et les impulsions ayant chacune une durée de l'ordre de 1 à 20 000 µsecondes,
dans lequel le produit alimentaire et, s'il est présent, le liquide environnant, ont une conductivité électrique de l'ordre de 0,01 à 10 S/m.

2. Un procédé selon la revendication 1, dans lequel les deux parois latérales opposées formant les électrodes sont placées à une distance l'une de l'autre de l'ordre de 0,5 à 50 centimètres.

3. Un procédé selon la revendication 1 ou 2, dans lequel chaque électrode forme un angle avec le plan vertical d'au plus 5°.

4. Un procédé selon la revendication 3, dans lequel la chambre de traitement a une forme cuboïde rectangulaire, définie par quatre parois latérales s'étendant verticalement et un fond rectangulaire, dans lequel deux parois latérales opposées des quatre parois latérales s'étendant verticalement forment chacune une électrode s'étendant verticalement.

5. Un procédé selon l'une quelconque des revendications précédentes, dans lequel le procédé est un procédé de cuisson parallèle ou consécutive de au moins deux produits alimentaires, dans lequel chacun des produits alimentaires est placé dans une chambre de traitement distincte telle que définie dans l'une quelconque des revendications précédentes, et cuit selon le procédé de l'une quelconque des revendications précédentes.

6. Un procédé selon la revendication 5, dans lequel chacun des au moins deux produits alimentaires est un composant d'un repas et les au moins deux produits alimentaires forment ensemble un repas.

7. Un procédé selon la revendication 5 ou 6, dans lequel les deux électrodes de chaque chambre de traitement sont connectées à un générateur de champ électrique pulsé commun et dans lequel chacun des au moins deux composants alimentaires est cuit consécutivement.

8. Un procédé selon l'une quelconque des revendications précédentes, dans lequel il y a une pause entre les impulsions d'une durée de l'ordre de 0,01 à 5,0 secondes.

9. Un procédé selon l'une quelconque des revendications précédentes, dans lequel le produit alimentaire est soumis à un champ électrique pulsé pendant moins de 5 minutes.

10. Système de cuisson adapté à la cuisson d'un produit alimentaire selon le procédé de l'une quelconque des revendications précédentes, le système de cuisson comprenant:
(a) un générateur de champ électrique pulsé;
(b) une station de couplage contenant ou adaptée pour recevoir plus d'une chambre de traitement; et, dans le cas où la station de couplage est une station de couplage adaptée pour recevoir les chambres de traitement,
(c) une unité comprenant les chambres de traitement adaptées pour être placées dans et retirées de la station de couplage,
- dans lequel la station de couplage est connectée électriquement au générateur de champ électrique pulsé et comprend des moyens pour connecter électriquement au moins une des électrodes de chacune des chambres de traitement au générateur de champ électrique pulsé lorsque les chambres de traitement sont contenues dans la station de couplage; et
- dans lequel chaque chambre de traitement a deux parois latérales opposées formant chacune une électrode, dans lequel chaque électrode forme un angle avec le plan vertical d'au plus 45°, de préférence d'au plus 5°.

11. Système de cuisson selon la revendication 10,
- dans lequel les deux parois latérales opposées de chaque chambre de traitement formant les électrodes sont placées à une distance l'une de l'autre de l'ordre de 0,5 à 50 centimètres; et/ou
- dans lequel chaque chambre de traitement a une forme cuboïde rectangulaire, définie par quatre parois latérales s'étendant verticalement et un fond rectangulaire, dans lequel deux parois latérales opposées des quatre parois latérales s'étendant verticalement forment chacune une électrode s'étendant verticalement.

12. Système de cuisson selon la revendication 10 ou 11, dans lequel le poste de couplage comprend un capot supérieur amovible capable de couvrir les chambres de traitement lorsqu'elles sont contenues dans le poste de couplage, de préférence dans lequel le capot supérieur comprend un ou plusieurs éléments de contact, dans lequel chacun des un ou plusieurs éléments de contact sont connectés électriquement au générateur de champ électrique pulsé et sont adaptés pour entrer en contact avec l'une des électrodes des chambres de traitement lorsque le capot supérieur recouvre les chambres de traitement.

13. Système de cuisson selon l'une quelconque des revendications 10 à 12, dans lequel le système comprend l'unité comprenant les chambres de traitement et dans laquelle chacune des chambres de traitement comporte au moins un fond perforé ou une paroi latérale perforée.

14. Système de cuisson selon la revendication 13, dans lequel le système comprend en outre:
(d) un logement adapté pour recevoir l'unité, lequel logement est adapté pour être placé dans et retiré de la station de couplage.

15. Un procédé selon l'une quelconque des revendications 1 à 9, utilisant le système de cuisson selon l'une quelconque des revendications 10 à 14.
